# EUROPÄISCHE PATENTSCHRIFT

(11) **EP 1 806 519 B1**
(45) Veröffentlichungstag und Bekanntmachung des Hinweises auf die Patenterteilung: **31.07.2013**
(21) Anmeldenummer: 06026389.4
(22) Anmeldetag: 20.12.2006
(51) Int. Cl.: F16F 15/123

(54) **Drehschwingungsdämpfer**
Torsional vibration damper
Amortisseur de vibrations torsionnelles

(30) Priorität: 09.01.2006 DE 102006001306
(43) Veröffentlichungstag der Anmeldung: 11.07.2007
(73) Patentinhaber: Schaeffler Technologies AG & Co. KG, 91074 Herzogenaurach (DE)
(72) Erfinder: Zhou, Bin, 77815 Bühl (DE); Jäckel, Johann, 77830 Bühlertal (DE)

(56) Entgegenhaltungen:
- DE-A1- 10 012 835
- DE-A1- 10 335 871
- DE-A1- 19 733 334
- DE-C1- 10 035 522
- FR-A1- 2 830 915

## Beschreibung

Die Erfindung betrifft Drehschwingungsdämpfer, insbesondere zur Verwendung im Antriebsstrang eines Kraftfahrzeuges, welche zumindest zwei zueinander, entgegen wenigstens eines Energiespeichers verdrehbare Bauteile besitzen, wobei der Energiespeicher aus zumindest zwei in Reihe geschalteten, komprimierbaren Federn besteht, deren einander zugewandten Enden sich mittel- oder unmittelbar zumindest während der Kompression des Energiespeichers aneinander abstützen.

Derartige Drehschwingungsdämpfer sind in derDE 100 35 522 C1 vorgeschlagen worden, wobei die einen Energiespeicher bildenden Schraubenfedern über Abstandsteile, welche keilartige Bereiche besitzen können, in Reihe geschaltet sind. In dieser Anmeldung wird auch vorgeschlagen, einen sich in Umfangsrichtung erstreckenden Energiespeicher mittels über die Längserstreckung des Energiespeichers verteilter Abstützelemente fliehkraftmäßig abzustützen, wobei der Aufbau des Drehschwingungsdämpfers derart vorgenommen ist, dass manche der Abstützelemente sich am ersten und andere Abstützelemente sich am zweiten Teil radial abstützen, um somit die auf den Energiespeicher einwirkende Zentrifugalkraft abzufangen.

Die über die Längserstreckung des Energiespeichers verteilten Abstützelemente können sich dabei alternierend am ersten Teil und am zweiten Teil abstützen. Es ist jedoch gemäß dieser Anmeldung auch möglich, die Mehrzahl von Abstützelementen jeweils gruppenweise alternierend am ersten und am zweiten Teil abzustützen.

Die vorliegende Erfindung baut auf dem in der DE 100 35 522 C1 offenbarten Abstützprinzip zumindest eines Energiespeichers eines Drehschwingungsdämpfers auf, weshalb der Offenbarungsinhalt dieser Anmeldung als in die vorliegende Anmeldung integriert zu betrachten ist.

Der vorliegenden Erfindung lag die Aufgabe zugrunde, Drehschwingungsdämpfer der eingangs beschriebenen Art bzw. Drehschwingungsdämpfer gemäß der vorerwähnten älteren Anmeldung bezüglich deren Dämpfungseigenschaften zu verbessern. Insbesondere soll gewährleistet werden, dass zumindest ein Teilbereich des Energiespeichers wenigstens während der Entspannung einer der diesen Energiespeicher bildenden Federn zwangsweise entspannt wird.

Diese Aufgabe wird dadurch gelöst, dass die einander zugewandten Enden der wenigstens zwei einen Energiespeicher bildenden Federn, wie insbesondere Schraubenfedern, jeweils nur an einem der beiden zueinander verdrehbaren Bauteile zumindest unter Fliehkrafteinwirkung abgestützt sind, und dass die einander zugewandten Enden mittel- oder unmittelbar über eine beim Entspannen oder bei Zugbeanspruchung wenigstens einer der Federn lösbare Verbindung mittels einer (-s) magnetischen Kraft (magnetischen Feldes) miteinander lösbare koppelbar sind.

Durch die erfindungsgemäße Ausgestaltung wird gewährleistet, dass bei einer Relativverdrehung der zumindest zwei Bauteile des Drehschwingungsdämpfers im Sinne einer Entspannung des Energiespeichers die einander zugewandten Enden der Federn auf Zug beansprucht werden. Diese Zugbeanspruchung gewährleistet, dass zumindest die Endbereiche der Federn zwangsweise entspannt werden, und zwar auch bei Vorhandensein einer dieser Entspannung entgegenwirkenden Reibung infolge der fliehkraftmäßigen Abstützung der Federn. Diese zwangsweise Entspannung zumindest der benachbarten Endbereiche der Federn erfolgt so lange, bis die auf die Endbereiche ausgeübten Zugkräfte ausreichend groß sind, um die lösbare Verbindung zu entriegeln bzw. aufzuheben. Durch diesen Effekt wird gewährleistet, dass bei erneuter Komprimierung des Energiespeichers zumindest über die entspannten Endbereiche ein allmählicher Wiederaufbau des Verdrehwiderstandes zwischen den zwei zueinander verdrehbaren Teilen stattfindet. Es wird also durch die erfindungsgemäße Ausgestaltung ein schlagartiger bzw. zu abrupter Aufbau des Verdrehwiderstands vermieden. Dadurch können insbesondere während der Übergänge von Zug- in Schubbetrieb und umgekehrt Anschlaggeräusche und/oder ein störender Schwingungsaufbau vermieden werden.

Die einander zugewandten Enden der zumindest zwei Federn eines Energiespeichers sind über eine kraftschlüssige Verbindung miteinander gekoppelt. Eine derartige kraftschlüssige Verbindung wird mittels einer magnetischen Kraft bzw. eines magnetischen Feldes erzeugt.

Die Koppelung zwischen den entsprechenden Enden kann auch mittels einer Verbindung realisiert werden, die eine Kombination von magnetisch kraftschlüssiger und formschlüssiger Verbindung darstellt.

Zweckmäßig kann es auch sein, wenn die einander zugewandten Enden der einen Energiespeicher bildenden zumindest zwei Federn über eine formschlüssige Verbindung miteinander gekoppelt sind. Eine derartige formschlüssige Verbindung kann beispielsweise mittels einer selbsttätig wirksam werdenden und entriegelbaren Einrastverbindung, wie z. B. schnappverbindungsartige Koppelung, realisiert werden.

In vorteilhafter Weise kann der wenigstens eine Energiespeicher in einer Aufnahme geführt sein, die von Bereichen der beiden Teile gebildet ist. Die beiden Teile können dabei zumindest einen sich jeweils wenigstens über einen Teilbereich der Längserstreckung des Energiespeichers in Umfangsrichtung erstreckenden Wandungsbereich aufweisen, der axial zumindest Bereiche von die Federn radial abstützenden Abstützelementen übergreift. Mittels dieser Abstützelemente werden die Federn entgegen der auf sie einwirkenden Zentrifugalkraft radial abgestützt. Beim Komprimieren des Energiespeichers gleiten diese Abstützelemente jeweils entlang wenigstens eines der Wandungsbereiche der beiden Teile. Derartige Abstützelemente können als Gleitschuhe und/oder als Rollschuhe ausgebildet sein, wie dies beispielsweise durch die DE 102 41 879 A1 und die DE 102 09 838 A1 vorgeschlagen wurde. Die Anordnung solcher Abstützelemente soll erfindungsgemäß dabei derart erfolgen, dass von den einander zugewandten Enden der zumindest zwei Federn das eine Ende der einen Feder an dem einen der Bauteile und das andere Ende der anderen Feder an dem zweiten der Bauteile fliehkraftmäßig abgestützt wird. Wie bereits erwähnt, kann die Abstützung jeder Feder mittels von Abstützelementen gleichzeitig sowohl am ersten als auch am zweiten Teil erfolgen.

Weitere Vorteile, konstruktive Merkmale und funktionelle Eigenschaften von erfindungsgemäß ausgebildeten Drehschwingungsdämpfern ergeben sich aus der nachfolgenden Beschreibung.

Dabei zeigen:
- Figur 1: einen Halbschnitt durch einen erfindungsgemäß ausgestalteten Drehschwingungsdämpfer und die
- Figuren 2 bis 3: verschiedene Ausgestaltungsmöglichkeiten der unter Zugkraft lösbaren Verbindungen bzw. Koppelungen zwischen den einander zugewandten Enden zweier Federn, welche einen Energiespeicher bilden.
- Figur 4: nicht erfindungsgemäße Ausführungsform

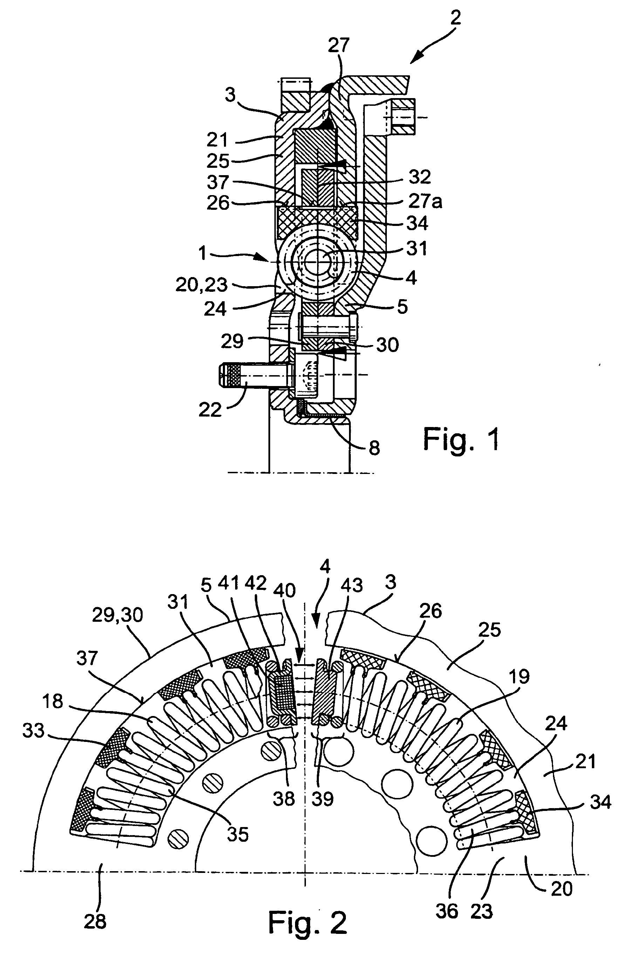

Der in Figur 1 dargestellte Drehschwingungsdämpfer 1 ist Bestandteil eines so genannten Zweimassenschwungrades 2. Das Eingangsteil des Drehschwingungsdämpfers 1 bildet eine Primärmasse 3, die zumindest über einen durch Schraubenfedern gebildeten Energiespeicher 4 über eine Sekundärmasse 5 und einer darauf vorzusehenden, nicht dargestellten Reibungskupplung mit der Eingangswelle eines Getriebes verbindbar ist. Die Reibungskupplung wird, wie durch den erwähnten Stand der Technik bzw. der älteren Anmeldung bekannt, auf die Sekundärmasse 5 unter Zwischenlegung einer Kupplungsscheibe montiert.

Das Eingangsteil (Primärmasse) 3 und das Ausgangsteil (Sekundärmasse) 5 des Drehschwingungsdämpfers 1 bzw. des Zweimassenschwungrades 2 sind über eine Lagerung 8 konzentrisch zueinander und verdrehbar gelagert. Die Lagerung 8 ist hier durch eine Gleitlagerung gebildet, die sowohl eine radiale als auch zumindest in eine Axialrichtung eine axiale Positionierung der beiden Schwungmassen 3 und 5 gewährleistet. Weitere Einzelheiten sind aus Figur 1 entnehmbar bzw. in den vorerwähnten Druckschriften beschrieben.

Wie beispielsweise aus Figur 2 ersichtlich ist, sind die beiden Teile bzw. Schwungmassen 3, 5 des Drehschwingungsdämpfers 1 entgegen der Wirkung von Energiespeichern 4 zueinander verdrehbar. Falls erforderlich, kann zwischen den Schwungmassen 3 und 5 zumindest eine Hystereseeinrichtung bzw. Reibeinrichtung vorgesehen werden.

Wie aus Figur 2 weiterhin ersichtlich ist, besteht ein Energiespeicher 4 aus zumindest zwei in Umfangsrichtung hintereinander angeordneten Schraubenfedern 18, 19. Aus Figur 2 ist auch entnehmbar, dass über den Gesamtumfang betrachtet hier zwei derartige Energiespeicher 4 vorhanden sind, die sich jeweils über ca. 170° bis 180° erstrecken. Ein Energiespeicher 4 besitzt somit ein Längen-Außendurchmesser-Verhältnis, das größer ist als sechs. Die Energiespeicher 4 können lediglich aus zwei Schraubenfedern 18, 19 bestehen, es sind jedoch auch Ausführungsformen denkbar, bei denen innerhalb mindestens einer der Schraubenfedern 18, 19 wenigstens eine Innenfeder aufgenommen ist. Es können jedoch auch unterschiedliche Innenfedern, die in Reihe geschaltet sind, innerhalb zumindest einer der einen Energiespeicher 4 bildenden Schraubenfedern 18, 19 vorgesehen werden.

Die Energiespeicher 4 können innerhalb einer zumindest radial nach außen hin dichten, ringartigen Kammer aufgenommen sein, welche in vorteilhafter Weise mit einem viskosen Medium bzw. einem Schmiermittel, wie zum Beispiel Fett, wenigstens teilweise gefüllt sein kann.

Bei dem dargestellten Ausführungsbeispiel gemäß Figur 1 ist jedoch eine praktisch trockene, gleitende Führung bzw. Abstützung der Federn 18, 19 vorhanden.

Sowohl geschmierte als auch praktisch trockene Ausführungsformen sind in der vorerwähnten PCT/DE2005/002202 dargestellt und beschrieben.

Wie aus den Figuren 1 und 2 entnehmbar ist, sind bei dem dargestellten Ausführungsbeispiel die Abstütz- bzw. Beaufschlagungsbereiche 20 des Eingangsteiles bzw. der Primärmasse 3 für einen Energiespeicher 4 unter anderem durch ein flanschartiges Bauteil 21 gebildet, das radial innen mittels Befestigungsmitteln in Form von Schrauben 22 mit der Abtriebswelle eines Motors verbindbar ist. Die Abstütz- bzw. Beaufschlagungsbereiche 20 sind durch radial verlaufende Arme bzw. Ausleger 23 gebildet, welche in Umfangsrichtung die Aufnahmen 24 für die Energiespeicher 4 begrenzen. Die Aufnahmen 24 sind hier durch in das flanschartige Bauteil 21 eingebrachte, segmentförmige Fenster 24 gebildet. Radial außen gehen die Arme 23 in einen ringförmigen Bereich 25 über, der die Aufnahmen 24 begrenzt und somit radiale Abstützbereiche 26 bildet für den Energiespeicher 4.

Wie aus Figur 1 ersichtlich ist, trägt das flanschartige Bauteil 21 in einem bestimmten axialen Abstand ein weiteres scheibenförmiges Bauteil 27, das in ähnlicher Weise wie das flanschartige Bauteil 21 zur Führung und radialen Abstützung der Energiespeicher 4 dient. Hierfür besitzt das scheibenförmige Bauteil 27 ebenfalls Aufnahmen, die hier durch Ausschnitte gebildet sind, welche in ähnlicher Weise wie die Fenster 24 des flanschartigen Bauteils 21 zur radialen Abstützung, Führung und Beaufschlagung der Energiespeicher 4 beitragen. Dies bedeutet, dass in den Endbereichen der entsprechenden Fenster des scheibenförmigen Bauteils 27 Abstütz- bzw. Beaufschlagungsbereiche vorgesehen sind, die ähnlich ausgebildet sind wie die radial verlaufenden Ausleger 23 des flanschartigen Bauteils 21. Die Ausschnitte des Bauteils 27 können radial nach innen hin offen sein.

Die am Ausgangsteil bzw. der Sekundärmasse 5 vorgesehenen Abstütz- bzw. Beaufschlagungsbereiche 28 für die Energiespeicher 4 sind hier von zwei aus Blech geformten Teilen 29, 30 getragen. Die beiden scheibenförmigen Blechformteile 29, 30 besitzen Aufnahmen in Form von Fenstern 31 für die Energiespeicher 4. Die Fenster 31 können, in Umfangsrichtung betrachtet, die gleiche winkelmäßige Ausdehnung aufweisen wie die in den Bauteilen 21 und 27 vorgesehenen Fenster 24 bzw. Ausschnitte. Wie aus den Figuren 1 und 2 ersichtlich ist, werden die Energiespeicher 4 von den beiden Blechformteilen 29, 30 umgriffen. Wie dies im Folgenden noch näher erläutert wird, dienen die beiden Blechformteile 29, 30 zur Führung und insbesondere zur radialen Abstützung der Energiespeicher 4. Das unmittelbare Ausgangselement 32 des Drehschwingungsdämpfers 1 könnte auch eine andere Gestalt aufweisen und beispielsweise nur durch ein einziges flanschartiges Bauteil gebildet sein.

Zumindest bei rotierender Einrichtung 1 werden die Energiespeicher 4 bzw. die Schraubenfedern 18, 19 radial nach außen gedrängt, weshalb sie entsprechend abgestützt werden müssen.

Bei dem dargestellten Ausführungsbeispiel erfolgt die Abstützung der Energiespeicher 4, wie insbesondere aus Figur 2 ersichtlich ist, über eine Vielzahl von Abstützelementen 33, 34, die über die umfangsmäßige Längserstreckung eines Energiespeichers 4 bzw. der Schraubenfedern 18, 19 verteilt sind. Die Abstützelemente 33, 34 sind bei dem dargestellten Ausführungsbeispiel durch Gleitschuhe gebildet, deren Wirkungsweise und Funktion im Folgenden noch näher erläutert wird.

Die Abstützelemente bzw. Gleitschuhe 33, 34 stützen jeweils zumindest eine Federwindung 35, 36 ab. Die Abstützelemente 33, 34 sind dabei in Bezug auf die abzustützenden Federwindungen derart ausgestaltet, dass sie einen Formschluss mit der zugeordneten, wenigstens einen Federwindung besitzen, wodurch gewährleistet wird, dass eine Positionierung bzw. Festlegung des entsprechenden Gleitschuhes zumindest in Längs- bzw. Umfangsrichtung und, falls notwendig, auch in radialer Richtung des Energiespeichers 4 bzw. der Federn 18, 19 gewährleistet ist. Bezüglich der möglichen Ausgestaltung eines derartigen Formschlusses wird ausdrücklich auf die DE 102 09 838 A1 verwiesen.

Radial nach außen hin werden die Gleitschuhe bzw. Abstützelemente 33, 34 über sich in Umfangsrichtung erstreckende Flächen 26, 27a, 37 abgestützt, welche hier von den Bauteilen 21, 27, 29 und 30 des Drehschwingungsdämpfers 1 getragen bzw. gebildet sind.

Wie insbesondere aus Figur 2 erkennbar ist, sind mindestens zwei Arten von Abstützelementen bzw. Gleitschuhen 33 und 34 vorgesehen, denen auch unterschiedliche Abstützflächen zugeordnet sind, nämlich 26, 27a für die Abstützelemente 34 und Abstützfläche 37 für die Abstützelemente 33.

In Figur 1 ist ein Abstützelement 34 dargestellt. Die radial äußeren Bereiche dieses Abstützelementes 34 sind derart ausgebildet, dass dieses zumindest über einen Teilbereich des möglichen Gesamtverdrehwinkels zwischen den beiden Schwungmassen 3, 5 keinen Kontakt mit der Abstützfläche 37 aufweist. Hierfür ist, wie aus Figur 1 ersichtlich, zwischen der Abstützfläche 37 und den gegenüberliegenden Bereichen eines Abstützelementes 34 ein Luftspalt vorhanden.

Beim Spannen und Entspannen der Energiespeicher 4 werden die durch Gleitschuhe gebildeten Abstützelemente 33, 34 entlang der ihnen zugeordneten Führungsflächen 37 bzw. 26 und 27a verschoben.

Aus Figur 1 ist ersichtlich, dass die Gleitschuhe 33, 34 im Querschnitt derart ausgebildet sind, dass die Federn auch in axialer Richtung eine Halterung bzw. Führung aufweisen.

Die Gleitschuhe 33 sind im Querschnitt derart ausgebildet, dass diese über eine Abstützfläche 37 fliehkraftmäßig zurückgehalten werden, jedoch gegenüber den Abstützflächen 26 und 27a zumindest über einen Teilbereich des möglichen Verdrehwinkels zwischen den beiden Schwungmassen 3 und 5 keinen Kontakt aufweisen.

Die Aufteilung in zwei Arten von Abstützflächen bzw. Gleitbahnanordnungen 26, 27a bzw. 37, welche einerseits dem Eingangsteil bzw. der Primärmasse 3 und andererseits dem Ausgangsteil bzw. der Sekundärmasse 5 zugeordnet sind, ermöglicht den Einsatz von unterschiedlichen Gleitschuhsätzen, die jeweils einer Gleitbahnanordnung zugeordnet sind.

Die einzelnen Gleitschuhe 33, 34 der Gleitschuhsätze können dabei, wie in Figur 2 dargestellt, gruppenweise jeweils nur einer der einen Energiespeicher 17 bildenden Schraubenfedern 18, 19 zugeordnet sein. Das bedeutet also, dass dann jeder Schraubenfeder 18, 19 nur eine Art von Gleitschuhen 33, 34 zugeordnet ist. Die Reihenfolge der Anordnung der zu den wenigstens zwei Gleitschuhgruppen gehörenden Gleitschuhe bzw. Abstützelemente 33, 34 kann jedoch beliebig erfolgen. So kann beispielsweise über die Länge zumindest einer der Schraubenfedern 18, 19 betrachtet, abwechselnd ein Gleitschuh 33 und 34 vorgesehen werden. Es handelt sich dann um eine 1/1-Anordnung. Es kann jedoch, wie bereits erwähnt, eine beliebige Anordnung erfolgen, zum Beispiel 2/1 oder 3/2 oder 3/1 oder 2/2 usw. Für die erfindungsgemäße Lösung ist es jedoch vorteilhaft, wenn die einander zugewandten Enden 38, 39 der Federn 18, 19 von unterschiedlich ausgestalteten bzw. abgestützten Gleitschuhen 33, 34 radial abgestützt werden. Dies ist insbesondere in Verbindung mit der erfindungsgemäßen, zumindest umfangsmäßigen Koppelung 40 zwischen den Federenden 38, 39 besonders vorteilhaft. Bei der in Figur 2 dargestellten Ausführungsform ist diese beim Entspannen bzw. bei Zugbeanspruchung zumindest einer der Federn 18, 19 lösbare Koppelung 40 durch eine magnetische Koppelung gebildet. Eine derartige magnetische Verbindung umfasst wenigstens einen Elektromagnet 41, der mit einem Ende einer der Federn 18, 19, hier dem Ende 38, zumindest umfangsmäßig fest verbunden ist. Der Magnet 41 ist hier von einem hutförmigen Bauteil 42 ummantelt, das mit dem Federende 38 vorzugsweise einen Formschluss aufweist. Die An- und Entkoppelung der beiden Federn 18, 19 bzw. der beiden Federenden 38, 39 erfolgt mittels der Magnetverbindung 40. Das dem Magnet 41 gegenüberliegende Federende 39 trägt hier ein entsprechendes Bauteil 43, das von dem Magnetfeld des Magnetes 41 angezogen wird. Die kräftemäßige Verbindung zwischen den Federenden 38 und 39 mittels der Koppelung 40 ist abhängig von der Stärke des Magnetfeldes und der verwendeten magnetisierbaren Bauteile 43. In vorteilhafter Weise können die die eigentliche magnetische Verbindung herstellenden Bauteile gegenüber den Federenden 38, 39 isoliert sein, so kann beispielsweise das hutartige Bauteil 42 aus Kunststoff bestehen.

Die erfindungsgemäße Anordnung einer lösbaren Verbindungskoppelung 40 zwischen den einander zugeordneten Federenden 38, 39 ermöglicht - in Kombination mit der fliehkraftmäßigen Abstützung dieser Federenden 38, 39 über unterschiedlich abgestützte Gleitschuhe 33, 34 - das Dämpfungsverhalten des Drehschwingungsdämpfers 1 zu optimieren. Dieses optimierte bzw. verbesserte Dämpfungsverhalten ist darauf zurückzuführen, dass beim Entspannen des Energiespeichers 4 aus einer komprimierten Position die beiden Federenden 38, 39 zunächst über die lösbare Koppelung 40 miteinander verbunden sind. Durch diese Koppelung 40 wird gewährleistet, dass die über die Gleitschuhe 33 und 34 abgestützten Endbereiche der Federn 18, 19 während einer Entspannungsphase des Energiespeichers 4 zwangsweise entspannt werden, und zwar aufgrund der durch die Koppelung 40 zwischen den Enden der Federn 18, 19 erzeugten Zugkraft. Diese Koppelung bzw. Zugkraft gewährleistet, dass zumindest die in den einander benachbarten Endbereichen der Federn 18 und 19 angeordneten Gleitschuhe 33, 34 zwangsweise gegenüber den ihnen jeweils zugeordneten Abstütz- bzw. Gleitflächen 37 bzw. 26 und 27a bewegt werden. Die Koppelung 40 ist dabei derart ausgelegt, dass die von dieser auf die Federn 18 und 19 ausgeübte Zugkraft in Entspannungsrichtung begrenzt ist auf ein Maß, das die Dauerfestigkeit bzw. Lebensdauer der Federn nicht oder aber nur unwesentlich beeinträchtigt.

Die erfindungsgemäße Aufteilung der den verschiedenen Abstützelementen zugeordneten Gleitbahnen (bzw. Gleitflächen) sowie das Vorsehen von lösbaren Koppelungen zwischen einander zugeordneten Federenden können auch in vorteilhafter Weise bei Energiespeichern Verwendung finden, die aus einer Mehrzahl von hintereinander angeordneten Einzelfederelementen bestehen, die über zwischengelegte Elemente in Reihe geschaltet sind, welche gleichzeitig die Enden der Federelemente radial abstützen. Derartige Energiespeicher sind beispielsweise durch die DE 198 10 500 C2, die DE 197 33 334 A1 und die DE 44 44 196 C2 bekannt geworden.

Die erfindungsgemäße Ausgestaltung kann auch in vorteilhafter Weise in Verbindung mit Abstützelementen, die sich unter Zwischenlegung wenigstens eines Wälzkörpers an zumindest einem Bauteil bzw. Wandungsbereich abstützen, Anwendung finden. Derartige rollschuhähnlich wirkende Abstützelemente sind beispielsweise durch die DE 102 41 879 A1 bekannt geworden.

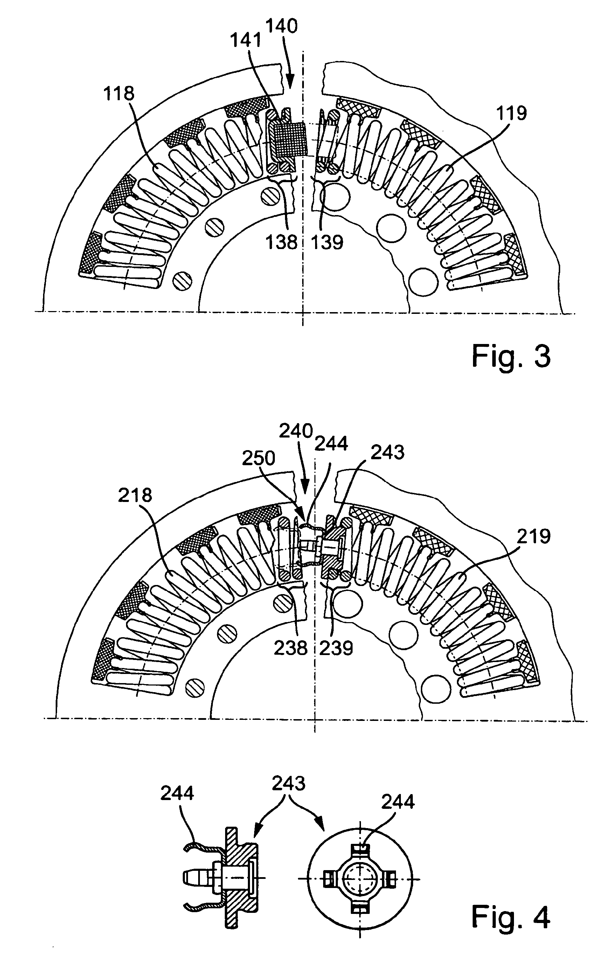

Die Ausführungsform gemäß Figur 3 unterscheidet sich gegenüber derjenigen gemäß Figur 2 dadurch, dass die Koppelung 140 einen gegenüber dem Federende 138 axial hervorstehenden Magnet 141 besitzt, der axial in den Endbereich 139 der Feder 119 eintauchen kann. Vorteil dieser Ausführung ist, dass die zwischen den beiden Federenden 138, 139 vorhandene Magnetkraft sanft an- und abgebaut werden kann, weil die Wirkfläche des Magnetfeldes bei der Trennung und dem Zusammentreffen der Federenden 138, 139 ab- bzw. zunimmt. Das in Figur 2 zum Beispiel durch einen Eisennapf gebildete Bauteil 43 ist dann nicht notwendig.

Bei der nicht erfindungsgemäß Ausführungsform gemäß Figur 4 erfolgt die Koppelung 240 zwischen den beiden Federenden 238, 239 mittels einer Schnappverbindung 250. Hierfür trägt wenigstens ein Ende der Federn 218, 219, hier das Ende 239, ein Rastelement 243, das eine form- und/oder kraftschlüssige Verbindung mit dem anderen Ende 238 gewährleisten kann. Diese Verbindung wird bei dem dargestellten Ausführungsbeispiel mittels elastischer Bereiche, wie zum Beispiel Zungen 244 gewährleistet, die in das Federende 238 eintauchen können und dabei elastisch verformt werden. Die Zungen 244 sind derart ausgestaltet, dass sie zumindest mit einer Windung der Feder 218 oder einem vom Federende 238 getragenen Bauteil eine gewisse formschlüssige Verbindung herstellen können. Die umfangsmäßige Kraft, die erforderlich ist um diese Verbindung zu lösen, ist abhängig von der Formgebung der diese Verbindung gewährleisten Bereiche und der Federsteifigkeit zum Beispiel der Zungen 244.

In vorteilhafter Weise kann auch eine Kombination der in den Figuren 2 bis 4 dargestellten Ausgestaltungsmöglichkeiten bzw. Koppelungsmöglichkeiten Anwendung finden.

Die erfindungsgemäße fliehkraftmäßige Abstützung von in Umfangsrichtung zwischen zwei relativ zueinander verdrehbaren Bauteilen wirksamen Energiespeichern und die Koppelung zwischen den einander benachbarten Enden der einen derartigen Energiespeicher bildenden zumindest zwei Federn, wie insbesondere Schraubenfedern, kann grundsätzlich bei Drehschwingungsdämpfern, wie zum Beispiel Zweimassenschwungrädern, Kupplungsscheiben, Wandler-Überbrückungskupplungen oder bei anderen in einem Antriebsstrang vorgesehenen Torsionsschwingungsdämpfern Verwendung finden.

### Bezugszeichenliste

- 1: Drehschwingungsdämpfer
- 2: Zweimassenschwungrad
- 3: Primärmasse
- 4: Energiespeicher
- 5: Sekundärmasse
- 6: -
- 7: -
- 8: Lagerung
- 9: -
- 10: -
- 11: -
- 12: -
- 13: -
- 14: -
- 15: -
- 16: -
- 17: -
- 18: Schraubenfeder
- 19: Schraubenfeder
- 20: Abstütz- bzw. Beaufschlagungsbereiche
- 21: Flanschartiges Bauteil
- 22: Schrauben
- 23: Arme bzw. Ausleger
- 24: Aufnahmen
- 25: Ringförmiger Bereich
- 26: Abstützbereiche
- 27: Scheibenförmiges Bauteil
- 27a: Abstützbereich
- 28: Abstütz- bzw. Beaufschlagungsbereiche
- 29: Scheibenförmiges Blechformteil
- 30: Scheibenförmiges Blechformteil
- 31: Fenster
- 32: Ausgangsteil
- 33: Abstützelement

- 34: Abstützelement
- 35: Federwindung
- 36: Federwindung
- 37: Abstützelement
- 38: Federende
- 39: Federende
- 40: Magnetverbindung bzw. Koppelung
- 41: Magnet
- 42: Hutartiges Bauteil
- 43: Magnetisierbares Bauteil

- 119: Feder
- 138: Federende
- 139: Federende
- 140: Koppelung

- 218: Feder
- 219: Feder
- 238: Federende
- 239: Federende
- 240: Koppelung
- 243: Rastelement
- 244: Elastische Zungen
- 250: Schnappverbindung

## Patentansprüche

1. Drehschwingungsdämpfer mit zumindest zwei zueinander, entgegen wenigstens eines Energiespeichers (4) verdrehbaren Bauteilen (3,5), wobei der Energiespeicher (4) aus zumindest zwei in Reihe geschalteten, komprimierbaren Federn (18,19) besteht, deren einander zugewandten Enden (38,39) sich mittel- oder unmittelbar zumindest während der Kompression des Energiespeichers (4) abstützen wobei die einander zugewandten Enden (38,39) der Federn (18,19) jeweils nur an einem der Bauteile (3,5) unter Fliehkrafteinwirkung abgestützt sind, und wobei sie über eine beim Entspannen oder bei Zugbeanspruchung zumindest einer der Federn lösbare Verbindung (40) mittels einer(-s) magnetischen Kraft (magnetischen Feldes) miteinander lösbar koppelbar sind.

2. Drehschwingungsdämpfer nach Anspruch 1, **dadurch gekennzeichnet, dass** die einander zugewandten Enden (38,39) der Federn (18,19) über eine trennbare, formschlüssige Verbindung (240) miteinander koppelbar sind.

3. Drehschwingungsdämpfer nach wenigstens einem der vorhergehenden Ansprüche, **dadurch gekennzeichnet, dass** die einander zugewandten Enden (38,39) der Federn (18,19) über eine schnappverbindungsartige Koppelung (240) miteinander lösbar verbindbar sind.

4. Drehschwingungsdämpfer nach einem der Ansprüche 1 bis 3, **dadurch gekennzeichnet, dass** die beiden Teile (3,5) wenigstens eine Aufnahme (24) für den Energiespeicher (4) definieren und jeweils Beaufschlagungsbereiche (20,28) besitzen, zwischen denen der Energiespeicher (4) bei einer Relativverdrehung der beiden Teile (3,5) komprimierbar ist, wobei der Energiespeicher (4) über seine Längserstreckung betrachtet mittels zumindest zwischen den Endbereichen (38,39) der diesen Energiespeicher (4) bildenden Federn (18,19) vorgesehenen Abstützelementen (339,37) derart fliehkraftmäßig abgestützt ist, dass von den einander zugewandten Enden (38,39) der beiden Federn (18,19) das eine Ende der einen Feder an dem einen Bauteil (3) und das andere Ende der anderen Feder an dem zweiten Bauteil (5) fliehkraftmäßig abgestützt sind.

5. Drehschwingungsdämpfer nach Anspruch 1 oder (4), **dadurch gekennzeichnet, dass** die fliehkraftmäßige Abstützung jeder Feder (18,19) mittels Abstützelementen (33,37) sowohl am ersten (3) als auch am zweiten (5) Teil erfolgt.

## Claims

1. Torsional vibration damper having at least two components (3, 5) which can be rotated with respect to one another counter to at least one energy store (4), the energy store (4) comprising at least two compressible springs (18, 19) which are connected in series and the ends (38, 39) of which, which face one another, are supported indirectly or directly at least during the compression of the energy store (4), those ends (38, 39) of the springs (18, 19) which face one another being supported in each case only on one of the components (3, 5) under the action of centrifugal force, and it being possible for the said ends (38, 39) of the springs (18, 19) to be coupled releasably to one another via a connection (40) by means of a magnetic force (magnetic field), which connection (40) can be released upon relieving or tensile loading of at least one of the springs.

2. Torsional vibration damper according to Claim 1, **characterized in that** those ends (38, 39) of the springs (18, 19) which face one another can be coupled to one another via a separable, positively locking connection (240).

3. Torsional vibration damper according to at least one of the preceding claims, **characterized in that** those ends (38, 39) of the springs (18, 19) which face one another can be connected releasably to one another via a coupling (240) in the manner of a snap-action connection.

4. Torsional vibration damper according to one of Claims 1 to 3, **characterized in that** the two parts (3, 5) define at least one receptacle (24) for the energy store (4) and in each case have loading regions (20, 28), between which the energy store (4) can be compressed upon a relative rotation of the two parts (3, 5), the energy store (4) being supported in centrifugal terms, as viewed over its longitudinal extent, by means of supporting elements (33, 37) which are provided at least between the end regions (38, 39) of the springs (18, 19) which form the said energy store (4), in such a way that, of those ends (38, 39) of the two springs (18, 19) which face away from one another, one end of one spring is supported in centrifugal terms on one component (3) and the other end of the other spring is supported in centrifugal terms on the second component (5).

5. Torsional vibration damper according to Claim 1 or 4, **characterized in that** the support in centrifugal terms of each spring (18, 19) is effected by means of supporting elements (33, 37) both on the first part (3) and on the second part (5).

## Revendications

1. Amortisseur de vibrations torsionnelles comprenant au moins deux composants (3, 5) pouvant tourner l'un par rapport à l'autre à l'encontre d'au moins un accumulateur d'énergie (4), l'accumulateur d'énergie (4) se composant d'au moins deux ressorts (18, 19) comprimables montés en série, dont les extrémités (38, 39) tournées l'une vers l'autre sont supportées de manière directe ou indirecte au moins pendant la compression de l'accumulateur d'énergie (4), les extrémités (38, 39) tournées l'une vers l'autre des ressorts (18, 19) étant supportées à chaque fois seulement sur l'un des composants (3, 5) sous l'effet de la force centrifuge, et pouvant être accouplées l'une à l'autre de manière desserrable par le biais d'une connexion desserrable (40) lors de la détente ou de la sollicitation en traction d'au moins l'un des ressorts au moyen d'une force magnétique (champ magnétique).

2. Amortisseur de vibrations torsionnelles selon la revendication 1, **caractérisé en ce que** les extrémités (38, 39) tournées l'une vers l'autre des ressorts (18, 19) peuvent être accouplées l'une à l'autre par le biais d'une connexion séparable par engagement positif (240).

3. Amortisseur de vibrations torsionnelles selon au moins l'une quelconque des revendications précédentes, **caractérisé en ce que** les extrémités (38, 39) tournées l'une vers l'autre des ressorts (18, 19) peuvent être connectées de manière desserrable l'une à l'autre par le biais d'un accouplement de type connexion par encliquetage (240).

4. Amortisseur de vibrations torsionnelles selon l'une quelconque des revendications 1 à 3, **caractérisé en ce que** les deux composants (3, 5) définissent au moins un logement (24) pour l'accumulateur d'énergie (4) et possèdent à chaque fois des régions de sollicitation (20, 28), entre lesquelles l'accumulateur d'énergie (4) peut être comprimé lors d'une rotation relative des deux composants (3, 5), l'accumulateur d'énergie (4), considéré sur son étendue longitudinale, étant supporté par le biais de la force centrifuge au moyen d'éléments de support (33, 37) prévus au moins entre les régions d'extrémité (38, 39) des ressorts (18, 19) formant cet accumulateur d'énergie (4), de telle sorte que parmi les extrémités (38, 39) tournées l'une vers l'autre des deux ressorts (18, 19), l'une des extrémités de l'un des ressorts soit supportée sur l'un des composants (3) et que l'autre extrémité de l'autre ressort soit supportée sur le deuxième composant (5), par le biais de la force centrifuge.

5. Amortisseur de vibrations torsionnelles selon la revendication 1 ou 4, **caractérisé en ce que** le support par le biais de la force centrifuge de chaque ressort (18, 19) s'effectue au moyen d'éléments de support (33, 37) à la fois au niveau du premier (3) et du deuxième (5) composant.
